(19) Europäisches Patentamt
European Patent Office
Office européen des brevets

(11) EP 3 315 574 B1

(12) **EUROPEAN PATENT SPECIFICATION**

(45) Date of publication and mention of the grant of the patent:
**01.04.2020 Bulletin 2020/14**

(21) Application number: **16814052.3**

(22) Date of filing: **06.05.2016**

(51) Int Cl.:
***C09J 169/00*** *(2006.01)* ***C08G 64/32*** *(2006.01)*
***C08G 64/02*** *(2006.01)*

(86) International application number:
**PCT/JP2016/063652**

(87) International publication number:
**WO 2016/208281 (29.12.2016 Gazette 2016/52)**

(54) **PRESSURE-SENSITIVE ADHESIVE AND PRESSURE-SENSITIVE ADHESIVE SHEET**

HAFTKLEBERZUSAMMENSETZUNG UND HAFTKLEBEFOLIE

ADHÉSIF SENSIBLE À LA PRESSION ET FEUILLE D'ADHÉSIF SENSIBLE À LA PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2015 JP 2015126765**

(43) Date of publication of application:
**02.05.2018 Bulletin 2018/18**

(73) Proprietors:
- **LINTEC Corporation**
  **Tokyo 173-0001 (JP)**
- **Sumitomo Seika Chemicals Co., Ltd.**
  **Kako-gun, Hyogo 675-0145 (JP)**

(72) Inventors:
- **MIYAZAKI Kentaro**
  **Tokyo 173-0001 (JP)**
- **IKEDA Fuminori**
  **Tokyo 173-0001 (JP)**
- **KARASHIMA Shuichi**
  **Osaka-shi**
  **Osaka 541-0041 (JP)**
- **NISHIOKA Kiyoshi**
  **Himeji-shi**
  **Hyogo 672-8076 (JP)**
- **MIYABARA Ryou**
  **Osaka-shi**
  **Osaka 541-0041 (JP)**

(74) Representative: **V.O.**
**P.O. Box 87930**
**Carnegieplein 5**
**2508 DH Den Haag (NL)**

(56) References cited:
**EP-A2- 1 219 695**
**CN-A- 103 881 078**
**JP-A- H06 503 039**
**JP-A- 2014 505 141**
**US-A1- 2004 219 193**
**US-A1- 2010 323 201**

- **Daicel Corporation: "PLACCEL CD220", , 24 October 2019 (2019-10-24), XP055635602, Retrieved from the Internet: URL:https://www.daicel.com/yuuki/en/product/index.php?page=1&act=detail&cid=26&id=193 [retrieved on 2019-10-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 315 574 B1

## Description

[Technical Field]

The present invention relates to a pressure-sensitive adhesive containing a novel adhesive component and a pressure-sensitive adhesive sheet obtained by using the pressure-sensitive adhesive.
Priority is claimed from Japanese Patent Application No. 2015-126765, filed June 24, 2015.

[Background Art]

An adhesive component in a conventional pressure-sensitive adhesive is mainly an acrylic resin, a rubber, a urethane resin or a silicone resin. This is due to the following reason. That is, since resins other than the above-mentioned resins have a glass transition point of at least ordinary temperature or exhibit crystallinity, tackiness cannot be developed even when such a resin is used, which makes it difficult to use as a component of a pressure-sensitive adhesive.
Polycarbonates have been used in a wide range of industrial fields since they have excellent characteristics as engineering plastics and are also relatively inexpensive. Typical polycarbonates include an aromatic polycarbonate obtained by using bisphenol A and having an aromatic group in the main chain. However, it has not been reported so far that an aromatic polycarbonate has been used as an adhesive component.
On the other hand, it has been reported that a polymer only having an aliphatic group and having no aromatic group in its main chain, and having a polycarbonate skeleton can be used as an adhesive component (see Patent Document 1). However, the polymers disclosed therein are a polyester synthesized from a polycarbonate diol or a derivative thereof and a dicarboxylic acid or a derivative thereof, a polyester synthesized from a polycarbonate dicarboxylic acid or a derivative thereof and a diol or a derivative thereof, and a polyurethane synthesized from a polycarbonate diol or a derivative thereof and a diisocyanate. That is, the above polymers are a polyester or a polyurethane having a carboxylic acid ester bond or a urethane bond in the main chain and a polycarbonate skeleton, and, to be precise, they cannot be said to be the so-called aliphatic polycarbonate having only an aliphatic group in the main chain, and having no connecting structure such as an ester bond and a urethane bond, other than a carbonate group.
On the other hand, it has been reported that an aliphatic polycarbonate having only an aliphatic (non-aromatic) group in the main chain can be produced by copolymerization of carbon dioxide and an epoxide. However, the applications of aliphatic polycarbonates have been limited to thermally decomposable binders and molded articles so far, and their applications as thermally decomposable binders have been particularly well studied (see, for example, Patent Documents 2 and 3). It is known that a molded article obtained using an aliphatic polycarbonate has lower mechanical properties, such as tensile strength, than when using other general purpose resins, and various methods have been studied for obtaining a molded article having improved mechanical properties by using a resin composition containing an aliphatic polycarbonate and other components (for example, see Patent Documents 4 and 5).
Patent Document 6 describes pressure-sensitive adhesive compositions which include an adhesive polymer having a glass transition point of -60°C to -5°C, as determined by a dynamic viscoelasticity measuring method, and a non-adhesive polymer having a glass transition point of -5°C or less and a fusing point of higher than 25°C, which non-adhesive polymer also has compatibility with the adhesive polymer in uncrystallized state. The polycarbonate diol, Placcel™ CD220, manufactured by Daicel Chemical Industries, Ltd., is exemplified as the non-adhesive polymer.
Patent Document 7 describes, in Comparative Example 1, a pressure-sensitive adhesive composition and a pressure-sensitive adhesive sheet. The composition consists of the aforementioned polycarbonate diol Placcel™ CD220, sebacic acid, tetra-n-butyl titanate as catalyst, and xylene as a reaction water discharging solvent and results in a polyester comprising the polycarbonate as an adhesive component which has a glass transition temperature of -50°C.
Patent Document 8 discloses resin compositions having resistance to moisture and oxygen transmission, and a sheet manufactured therefrom, the resin compositions including polycarbonate terpolymer produced by reacting two different epoxide compounds with carbon dioxide.

[Citation List]

[Patent Documents]

[Patent Document 1] Japanese Unexamined Patent Application, First Publication No. Hei 9-235537
[Patent Document 2] Japanese Unexamined Patent Application, First Publication No. Hei 6-334282
[Patent Document 3] Japanese Unexamined Patent Application, First Publication No. Hei 5-24934
[Patent Document 4] Japanese Unexamined Patent Application, First Publication No. 2014-1263

[Patent Document 5] Japanese Unexamined Patent Application, First Publication No. 2014-19748
[Patent Document 6] U.S. Patent Application Publication US 2004/0219193 A1
[Patent Document 7] European Patent Application Publication EP 1219695 A2
[Patent Document 8] U.S. Patent Application Publication US 2010/0323201 A1

[Summary of Invention]

[Technical Problem]

However, it has not been disclosed so far that an aliphatic polycarbonate as described above can be used as an adhesive component.

Therefore, if a component that, like this kind of polycarbonate, is not specifically known to be usable as an adhesive component can be newly employed as an adhesive component, it is extremely useful in view of exploiting new applications.

The present invention has been made in view of the above circumstances, and has the object of providing a pressure-sensitive adhesive containing a novel adhesive component and a pressure-sensitive adhesive sheet obtained by using the pressure-sensitive adhesive.

[Solution to Problem]

In order to solve the above problem, the present invention provides a pressure-sensitive adhesive containing an aliphatic polycarbonate as an adhesive component, wherein the aliphatic polycarbonate neither comprises a carboxylic acid ester bond, nor a urethane bond in the main chain thereof, and

the aliphatic polycarbonate comprises a structural unit (i) having an alkoxy group, and a structural unit (ii) having either one or both of a hydroxy group and a carboxy group, and the glass transition point of the aliphatic polycarbonate is 0°C or less, wherein the glass transition point is determined by the method described herein.

In the pressure-sensitive adhesive of the present invention, it is preferable that the aforementioned aliphatic polycarbonate has a weight average molecular weight of 100,000 or more, the weight average molecular weight being determined by the method described herein.

In the pressure-sensitive adhesive of the present invention, it is preferable that the aforementioned aliphatic polycarbonate has a structural unit represented by the following general formula (1)-1.

[Chemical Formula 1]

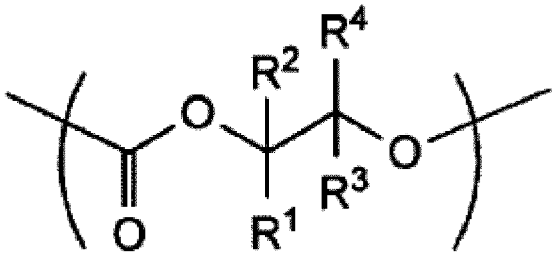

(1) -1

(in the formula, $R^1$, $R^2$, $R^3$ and $R^4$ each independently represents a hydrogen atom or an alkyl group, an alkoxy group, an alkenyl group, an alkylcarbonyloxyalkyl group, an alkenylcarbonyloxyalkyl group or an aryl group which may have a substituent, and when any two or more of $R^1$, $R^2$, $R^3$ and $R^4$ are alkyl groups which may have a substituent, these two or more alkyl groups may be bonded to each other to form a ring.)

In the pressure-sensitive adhesive of the present invention, it is preferable that the aforementioned aliphatic polycarbonate has one or both of an alkyl group and an alkoxy group having 1 to 16 carbon atoms as a side chain.

In the pressure-sensitive adhesive of the present invention, it is preferable that the ratio of the amount of the aforementioned structural unit (ii) with respect to the total amount of the aforementioned structural unit (i) and the aforementioned structural unit (ii) is from 0.1 to 10 mol%.

In the pressure-sensitive adhesive of the present invention, it is preferable that the aforementioned aliphatic

polycarbonate is obtained by using carbon dioxide as a raw material.

Further, the present invention provides a pressure-sensitive adhesive sheet comprising a pressure-sensitive adhesive layer obtained by using the aforementioned pressure-sensitive adhesive.

[Advantageous Effects of Invention]

The present invention provides a pressure-sensitive adhesive containing a novel adhesive component as described herein above, and a pressure-sensitive adhesive sheet obtained by using the pressure-sensitive adhesive.

[Brief Description of Drawings]

FIG. 1 is a cross-sectional view schematically showing an example of an embodiment of a pressure-sensitive adhesive sheet according to the present invention.
FIG. 2 is a cross-sectional view schematically showing an example of another embodiment of the pressure-sensitive adhesive sheet according to the present invention.
FIG. 3 is a cross-sectional view schematically showing an example of another embodiment of the pressure-sensitive adhesive sheet according to the present invention.

[Description of Embodiments]

<Pressure-sensitive adhesive>

The pressure-sensitive adhesive according to the present invention contains an aliphatic polycarbonate as an adhesive component, and the aliphatic polycarbonate has neither a carboxylic acid ester bond, nor a urethane bond in its main chain. The aliphatic polycarbonate has not been reported so far to serve as an adhesive component.

It should be noted that in the present specification, the term "main chain" means a chain-like structure formed by polymerization of monomers.

(Aliphatic polycarbonate)

Among polycarbonates, the aliphatic polycarbonate contained in the pressure-sensitive adhesive is one in which the main chain is constituted only by a carbonate group (-O-C(=O)-O-) and an aliphatic group, and having a structure where divalent aliphatic groups constituting the main chain are connected to each other by the carbonate group.

The aliphatic polycarbonate may or may not have an aromatic group in its side chain.

In the present specification, the term "side chain" refers to a group (pendant, side group) bonded to the main chain or a molecular chain which can be regarded as a pendant.

Further, the aliphatic polycarbonate has neither a carboxylic acid ester bond (-C(=O)-O-), nor a urethane bond (-NH-C(=O)-O-) in its main chain.

That is, for example, the aliphatic polycarbonate does not include a polymer having a polycarbonate skeleton obtained by reacting a carboxylic acid or a derivative thereof with an alcohol to form an ester bond in the main chain, or a polymer having a polycarbonate skeleton obtained by reacting a compound having an isocyanate group with an alcohol to form a urethane bond in the main chain. Here, examples of the carboxylic acid derivative include a carboxylic acid anhydride and a carboxylic acid halide capable of forming an ester bond.

Examples of the aliphatic polycarbonate include those having a structural unit represented by the following general formula (1).

[Chemical Formula 2]

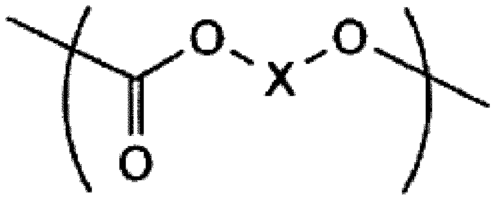

(1)

(In the formula, X is a divalent aliphatic hydrocarbon group which has a substituent.)

In the formula, X is a divalent aliphatic hydrocarbon group which has a substituent, and the aliphatic hydrocarbon group may be any of linear, branched or cyclic, and may have both a chain-like structure and a cyclic structure. Further, the cyclic aliphatic hydrocarbon group may be either monocyclic or polycyclic.

The aliphatic hydrocarbon group preferably has 3 to 18 carbon atoms, more preferably 4 to 14 carbon atoms, and particularly preferably 6 to 12 carbon atoms. It should be noted that the above number of carbon atoms does not include the number of carbon atoms of the substituent. The number of carbon atoms of the substituent is preferably from 1 to 16, and more preferably from 4 to 12.

In X, the expression "the aliphatic hydrocarbon group has a substituent" means that at least one hydrogen atom of the aliphatic hydrocarbon group is substituted with a group (substituent) other than a hydrogen atom.

The substituent which the aliphatic hydrocarbon group may have is not particularly limited over and above the aforementioned structural units (i) and (ii) of the aliphatic polycarbonate, and examples thereof include a hydroxy group (-OH), a carboxy group (-C(=O)-OH), a halogen atom, an alkoxy group, an alkenyl group, an alkenyloxy group, an aryl group, a heteroaryl group, an aryloxy group, a heteroaryloxy group, an alkylsilyl group, an alkylsilyloxy group, a carboxyalkylthio group, a hydroxyalkylthio group, an alkylcarbonyloxyalkyl group, an alkenylcarbonyloxyalkyl group, a carboxyalkylthioalkylcarbonyloxyalkyl group and a hydroxyalkylthioalkylcarbonyloxyalkyl group. As described above, the aliphatic polycarbonate may or may not have an aromatic group in the side chain branched from the main chain (aliphatic group), as long as the group other than the carbonate group constituting the main chain is only an aliphatic group.

Examples of the halogen atom in the substituent include a fluorine atom, a chlorine atom, a bromine atom and an iodine atom.

Examples of the alkoxy group in the substituent include a methoxy group, an ethoxy group, an n-propoxy group, an isopropoxy group, an n-butoxy group, an isobutoxy group, a sec-butoxy group, a tert-butoxy group, a cyclopropoxy group and cyclobutoxy group which are the same as the alkoxy groups represented by $R^1$ described later herein.

Examples of the alkenyl group in the substituent include an ethenyl group (also referred to as a vinyl group), a 2-propenyl group (also referred to as an allyl group), a 1-methylethenyl group, a 2-methylethenyl group, a 1-cyclohexenyl group, a 2-cyclohexenyl group and a 3-cyclohexenyl group which are the same as the alkenyl groups represented by $R^1$ described later herein.

Examples of the alkenyloxy group in the substituent include a monovalent group formed by bonding the aforementioned alkenyl group to an oxygen atom, such as an ethenyloxy group (also referred to as a vinyloxy group), a 2-propenyloxy group (also referred to as an allyloxy group), a 1-methylethenyloxy group, a 2-methylethenyloxy group, a 1-cyclohexenyloxy group, a 2-cyclohexenyloxy group and a 3-cyclohexenyloxy group.

The aryl group in the substituent may be either monocyclic or polycyclic and preferably has 6 to 13 carbon atoms, and examples thereof include a phenyl group, a 1-naphthyl group, a 2-naphthyl group, an o-tolyl group, an m-tolyl group, a p-tolyl group and a xylyl group (also referred to as a dimethylphenyl group), and also include groups in which one or more hydrogen atoms of these aryl groups are further substituted with these aryl groups or the same alkyl groups as those exemplified for $R^1$ described later herein. The aryl group having these substituents preferably has 6 to 13 carbon atoms including those of the substituents.

The heteroaryl group in the substituent may be either monocyclic or polycyclic.

As the heteroaryl group, for example, a group in which one or more carbon atoms constituting the aromatic ring skeleton in the aryl group are substituted alone, or together with a hydrogen atom bonded to the carbon atom, with a hetero atom, and having aromaticity; and a group in which one or more carbon atoms constituting the ring skeleton in the cyclic unsaturated aliphatic hydrocarbon group having 3 or more carbon atoms are substituted alone, or together with a hydrogen atom bonded to the carbon atom, with a hetero atom, and having aromaticity can be mentioned.

Preferable examples of the hetero atom include an oxygen atom, a nitrogen atom, a sulfur atom, a selenium atom and a phosphorus atom. The number of hetero atoms constituting the aromatic ring skeleton is not particularly limited, but it is preferably 1 to 2. Further, in the case where the number of hetero atoms constituting the aromatic ring skeleton is 2 or more, all of the hetero atoms may be the same or different from each other, or only some of them may be the same.

It should be noted that in the present specification, for example, a group having a structure in which an aromatic hydrocarbon group and an aromatic heterocyclic group are condensed is referred to as an aromatic heterocyclic group.

As the aromatic heterocyclic group, for example, a 4-pyridyl group can be mentioned.

Examples of the aryloxy group in the substituent include a monovalent group formed by bonding the aforementioned aryl group to an oxygen atom, such as a phenoxy group, a 1-naphthoxy group and a 2-naphthoxy group.

Examples of the heteroaryloxy group in the substituent include a monovalent group formed by bonding the aforementioned heteroaryl group to an oxygen atom.

The alkylsilyl group in the substituent may be any of a monoalkylsilyl group, a dialkylsilyl group and a trialkylsilyl group.

In the alkylsilyl group, the alkyl group bonded to the silicon atom may be any of linear, branched or cyclic, and may have both a chain-like structure and a cyclic structure. Further, the cyclic alkyl group may be either monocyclic or polycyclic. Examples of the alkyl group bonded to the silicon atom include the same alkyl groups as those represented by $R^1$ described later herein, and the number of carbon atoms is preferably from 1 to 10.

In the dialkylsilyl group and the trialkylsilyl group, a plurality of alkyl groups may be the same as or different from each other. That is, in the dialkylsilyl group, the two alkyl groups may be the same as each other (examples of such dialkylsilyl groups include a dimethylsilyl group), or they may be different from each other (examples of such dialkylsilyl groups include an ethylmethylsilyl group). In the trialkylsilyl group, all three alkyl groups may be the same (examples of such trialkylsilyl groups include a trimethylsilyl group), all of them may be different from each other (examples of such trialkylsilyl groups include an ethylmethyl-n-propylsilyl group), or only two of them may be the same (examples of such trialkylsilyl groups include an ethyldimethylsilyl group).

Examples of the alkylsilyloxy group in the substituent include a monovalent group formed by bonding the aforementioned alkylsilyl group to an oxygen atom, such as a dimethylsilyloxy group, an ethylmethylsilyloxy group, a trimethylsilyloxy group, an ethylmethyl-n-propylsilyloxy group and an ethyldimethylsilyloxy group.

The carboxyalkylthio group in the substituent may be a monocarboxyalkylthio group having only one carboxy group or a polycarboxyalkylthio group having two or more carboxy groups, such as a dicarboxyalkylthio group and a tricarboxyalkylthio group, although a monocarboxyalkylthio group is preferable.

The bonding position of the carboxy group in the carboxyalkylthio group is not particularly limited, but it is preferably the terminal portion of the hydrocarbon chain.

Examples of the carboxyalkylthio group in the substituent include those in which the oxygen atom of the alkoxy group is substituted with a sulfur atom and one or more hydrogen atoms are substituted with carboxy groups. For example, when it is a monocarboxyalkylthio group, a carboxymethylthio group ($-S-CH_2-C(=O)-OH$), a 2-carboxyethylthio group ($-S-CH_2CH_2-C(=O)-OH$), a 3-carboxy-n-propylthio group ($-S-CH_2CH_2CH_2-C(=O)-OH$) can be mentioned, but it is not limited thereto.

The hydroxyalkylthio group in the substituent may be a monohydroxyalkylthio group having only one hydroxy group or a polyhydroxyalkylthio group having two or more hydroxy groups, such as a dihydroxyalkylthio group and a trihydroxyalkylthio group, although a monohydroxyalkylthio group is preferable.

The bonding position of the hydroxy group in the hydroxyalkylthio group is not particularly limited, but it is preferably the terminal portion of the hydrocarbon chain.

Examples of the hydroxyalkylthio group in the substituent include those in which the oxygen atom of the alkoxy group is substituted with a sulfur atom and one or more hydrogen atoms are substituted with hydroxy groups. For example, when it is a monohydroxyalkylthio group, a hydroxymethylthio group ($-S-CH_2-OH$), a 2-hydroxyethylthio group ($-S-CH_2CH_2-OH$), a 3-hydroxy-n-propylthio group ($-S-CH_2CH_2CH_2-OH$) can be mentioned, but it is not limited thereto.

Examples of the alkylcarbonyloxyalkyl group in the substituent include the same alkylcarbonyloxyalkyl groups as those for $R^1$ described later herein, such as a methylcarbonyloxymethyl group ($CH_3-C(=O)-O-CH_2-$), an ethylcarbonyloxymethyl group ($CH_3CH_2-C(=O)-O-CH_2-$), an n-propylcarbonyloxymethyl group ($CH_3CH_2CH_2-C(=O)-O-CH_2-$) and an isopropylcarbonyloxymethyl group ($(CH_3)_2CH-C(=O)-O-CH_2-$).

Examples of the alkenylcarbonyloxyalkyl group in the substituent include the same alkenylcarbonyloxyalkyl groups as those for $R^1$ described later herein, such as an ethenylcarbonyloxymethyl group ($CH_2=CH-C(=O)-O-CH_2-$) and a 1-methyl ethenylcarbonyloxymethyl group ($CH_2-C(CH_3)-C(=O)-O-CH_2-$).

As the carboxyalkylthioalkylcarbonyloxyalkyl group in the substituent, for example, a monovalent group in which one hydrogen atom in the alkyl group bonded to the carbonyl group in the aforementioned alkylcarbonyloxyalkyl group is substituted with the aforementioned carboxyalkylthio group can be mentioned.

Examples of the hydroxyalkylthioalkylcarbonyloxyalkyl group in the substituent include a monovalent group in which one hydrogen atom in the alkyl group bonded to the carbonyl group in the aforementioned alkylcarbonyloxyalkyl

group is substituted with the aforementioned hydroxyalkylthio group.

The number of the substituents the aliphatic hydrocarbon group has is not particularly limited, and may be one, two or more, and all the hydrogen atoms may be substituted with a substituent. Further, in the aliphatic hydrocarbon group having a substituent, the number of carbon atoms including those of the substituent is preferably within the above-mentioned range.

In the aliphatic hydrocarbon group, when the number of the substituents is 2 or more, these substituents may be the same or different from each other. That is, two or more substituents may all be the same or different from each other, or only some of them may be the same.

The bonding position of the substituent in the aliphatic hydrocarbon group is not particularly limited, but it is preferably a position at which the terminal portion of the substituent is the terminal portion of the side chain, and it may be a carbon atom constituting the main chain in X or a carbon atom at the terminal of a side chain.

The substituent of the aliphatic hydrocarbon group is preferably a group having a hydroxy group or a carboxy group, such as a hydroxy group, a carboxy group, a carboxyalkylthio group, a hydroxyalkylthio group, a carboxyalkylthioalkylcarbonyloxyalkyl group, and a hydroxyalkylthioalkylcarbonyloxyalkyl group. In the case of having such a substituent, the aliphatic polycarbonate can be easily crosslinked with a crosslinking agent at a hydroxy group or a carboxy group, and can easily adjust the adhesive force and holding force of the pressure-sensitive adhesive sheet described later herein.

The aliphatic hydrocarbon group which may have a substituent is preferably an alkylene group which may have a substituent, and more preferably an ethylene group which may have a substituent.

Further, the aliphatic polycarbonate preferably includes a structural unit represented by the following general formula (1)-1 (hereinafter sometimes abbreviated as "structural unit (1)-1")).

[Chemical Formula 3]

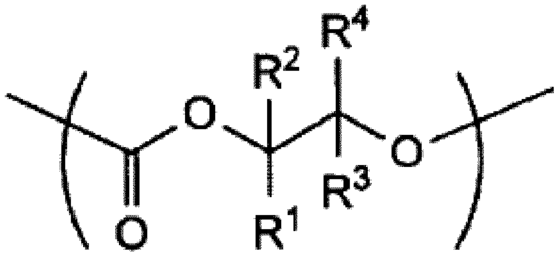

(1) −1

(in the formula, $R^1$, $R^2$, $R^3$ and $R^4$ each independently represents a hydrogen atom or an alkyl group, an alkoxy group, an alkenyl group, an alkylcarbonyloxyalkyl group, an alkenylcarbonyloxyalkyl group or an aryl group which may have a substituent, and when any two or more of $R^1$, $R^2$, $R^3$ and $R^4$ are alkyl groups which may have a substituent, these two or more alkyl groups may be bonded to each other to form a ring.)

The alkyl group represented by $R^1$ to $R^4$ may be any of linear, branched or cyclic, and may have both a chain-like structure and a cyclic structure. Further, the cyclic alkyl group may be either monocyclic or polycyclic.

The alkyl group represented by $R^1$ to $R^4$ preferably has 1 to 16 carbon atoms.

Examples of the linear or branched alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group, a decyl group, an undecyl group, a dodecyl group, a tridecyl group, a tetradecyl group, a pentadecyl group, and a hexadecyl group.

Examples of the cyclic alkyl group include a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group and a tricyclodecyl group, and also include those in which one or more hydrogen atoms of these cyclic alkyl groups are substituted with a linear, branched or cyclic alkyl group. Here, examples of the linear, branched and cyclic alkyl groups which substitute hydrogen atoms include those mentioned

above as examples of the alkyl groups represented by $R^1$ to $R^4$.

The linear alkyl group may have 1 or more carbon atoms, but it has preferably 2 or more carbon atoms, more preferably 3 or more carbon atoms, and particularly preferably 4 or more carbon atoms. The number of carbon atoms of the branched and cyclic alkyl groups may be 3 or more, but it is more preferably 4 or more.

The linear, branched and cyclic alkyl groups preferably have 16 or less carbon atoms, more preferably 12 or less carbon atoms, and particularly preferably 8 or less carbon atoms.

The linear alkyl group preferably has 1 to 16 carbon atoms, more preferably 2 to 12 carbon atoms, and still more preferably 3 to 8 carbon atoms.

The branched and cyclic alkyl groups preferably have 3 to 16 carbon atoms, more preferably 4 to 12 carbon atoms, and still more preferably 4 to 8 carbon atoms.

By ensuring that the number of carbon atoms of the alkyl group has such a lower limit value and an upper limit value, the aliphatic polycarbonate has an even lower glass transition point (Tg), and the properties as an adhesive component, such as adhesive force and processability, are further improved.

The alkoxy group represented by $R^1$ to $R^4$ may be any of linear, branched or cyclic, and may have both a chain-like structure and a cyclic structure. Further, the cyclic alkoxy group may be either monocyclic or polycyclic.

The alkoxy group represented by $R^1$ to $R^4$ preferably has 1 to 16 carbon atoms.

Examples of the linear or branched alkoxy group include a monovalent group formed by bonding the linear or branched alkyl group represented by $R^1$ to $R^4$ to an oxygen atom, such as a methoxy group, an ethoxy group, an n-propoxy group, an isopropoxy group, an n-butoxy group, an isobutoxy group, a sec-butoxy group, a tert-butoxy group, an n-pentyloxy group, an isopentyloxy group, a neopentyloxy group, a tert-pentyloxy group, a 1-methylbutyloxy group, an n-hexyloxy group, a 2-methylpentyloxy group, a 3-methylpentyloxy group, 2,2-dimethylbutyloxy group, a 2,3-dimethylbutyloxy group, an n-heptyloxy group, a 2-methylhexyloxy group, a 3-methylhexyloxy group, a 2,2-dimethylpentyloxy group, a 2,3-dimethylpentyloxy group, a 2,4-dimethylpentyloxy group, a 3,3-dimethylpentyloxy group, a 3-ethylpentyloxy group, a 2,2,3-trimethylbutyloxy group, an n-octyloxy group, an isooctyloxy group, a 2-ethylhexyloxy group, a nonyloxy group, a decyloxy group, an undecyloxy group, a dodecyloxy group, a tridecyloxy group, a tetradecyloxy group, a pentadecyloxy group and a hexadecyloxy group.

Examples of the cyclic alkoxy group include a monovalent group formed by bonding the cyclic alkyl group represented by $R^1$ to $R^4$ to an oxygen atom, such as a cyclopropoxy group, a cyclobutoxy group, a cyclopentyloxy group and a cyclohexyloxy group.

The linear alkoxy group may have 1 or more carbon atoms, but it has preferably 2 or more carbon atoms, more preferably 3 or more carbon atoms, and particularly preferably 4 or more carbon atoms. The branched and cyclic alkoxy groups may have 3 or more carbon atoms.

The linear, branched and cyclic alkoxy groups preferably have 16 or less carbon atoms, more preferably 12 or less carbon atoms, and particularly preferably 8 or less carbon atoms.

The linear alkoxy group preferably has 1 to 16 carbon atoms, more preferably 2 to 12 carbon atoms, still more preferably 3 to 8 carbon atoms, and particularly preferably 4 to 8 carbon atoms.

The branched and cyclic alkoxy group preferably have 3 to 16 carbon atoms, and more preferably 3 to 8 carbon atoms.

By ensuring that the number of carbon atoms of the alkoxy group has such a lower limit value and an upper limit value, the aliphatic polycarbonate has an even lower glass transition point (Tg), and the properties as an adhesive component, such as adhesive force and processability, are further improved.

The alkenyl group represented by $R^1$ to $R^4$ may be any of linear, branched or cyclic, and may have both a chain-like structure and a cyclic structure. Further, the cyclic alkenyl group may be either monocyclic or polycyclic.

The alkenyl group represented by $R^1$ to $R^4$ preferably has 2 to 16 carbon atoms.

As the alkenyl group represented by $R^1$ to $R^4$, for example, a group in which one single bond (C-C) between carbon atoms in the alkyl group (one having 2 or more carbon atoms) represented by $R^1$ to $R^4$ has been substituted with a double bond (C=C) can be mentioned.

Examples of the linear or branched alkenyl group include an ethenyl group (also referred to as a vinyl group), a 2-propenyl group (also referred to as an allyl group), a 1-methylethenyl group (also referred to as an isopropenyl group) and a 2-methylethenyl group (also referred to as a 1-propenyl group).

Examples of the cyclic alkenyl group include a 1-cyclohexenyl group, a 2-cyclohexenyl group and 3-cyclohexenyl group.

The linear alkenyl group may have 2 or more carbon atoms, and the branched and cyclic alkyl groups may have 3 or more carbon atoms.

The linear, branched and cyclic alkenyl groups preferably have 16 or less carbon atoms, more preferably 12 or less carbon atoms, and particularly preferably 8 or less carbon atoms.

The linear alkenyl group preferably has 2 to 16 carbon atoms, more preferably 2 to 12 carbon atoms, and still more preferably 2 to 8 carbon atoms.

The branched and cyclic alkenyl groups preferably have 3 to 16 carbon atoms, more preferably 3 to 12 carbon atoms, and still more preferably 3 to 8 carbon atoms.

By ensuring that the number of carbon atoms of the alkenyl group has such a lower limit value and an upper limit value, the aliphatic polycarbonate has an even lower glass transition point (Tg), and the properties as an adhesive component, such as adhesive force and processability, are further improved.

Examples of the alkylcarbonyloxyalkyl group represented by $R^1$ to $R^4$ include a monovalent group obtained by substituting one hydrogen atom of the alkyl group represented by $R^1$ to $R^4$ with an alkylcarbonyloxy group, and examples of the alkylcarbonyloxy group include a monovalent group in which the alkyl group represented by $R^1$ to $R^4$ is bonded to a carbon atom of a carbonyloxy group (-C(=O)-O-).

The hydrocarbon group in the alkylcarbonyloxyalkyl group represented by $R^1$ to $R^4$ is preferably linear or branched.

The alkylcarbonyloxyalkyl group represented by $R^1$ to $R^4$ may have 3 or more carbon atoms, and preferably has 3 to 16 carbon atoms.

The alkylcarbonyloxyalkyl group is preferably an alkylcarbonyloxymethyl group, such as a methylcarbonyloxymethyl group ($CH_3$-C(=O)-O-$CH_2$-), an ethylcarbonyloxymethyl group ($CH_3CH_2$-C(=O)-O-$CH_2$-), an n-propylcarbonyloxymethyl group ($CH_3CH_2CH_2$-C(=O)-O-$CH_2$-) or an isopropylcarbonyloxymethyl group (($CH_3$)$_2$CH-C(=O)-O-$CH_2$-).

Examples of the alkenylcarbonyloxyalkyl group represented by $R^1$ to $R^4$ include a monovalent group obtained by substituting one hydrogen atom of the alkyl group represented by $R^1$ to $R^4$ with an alkenylcarbonyloxy group, and examples of the alkenylcarbonyloxy group include a monovalent group in which the alkenyl group represented by $R^1$ to $R^4$ is bonded to a carbon atom of a carbonyloxy group (-C(=O)-O-).

The hydrocarbon group in the alkenylcarbonyloxyalkyl group represented by $R^1$ to $R^4$ is preferably linear or branched.

The alkenylcarbonyloxyalkyl group represented by $R^1$ to $R^4$ may have 4 or more carbon atoms, and preferably has 4 to 16 carbon atoms.

The alkenylcarbonyloxyalkyl group is preferably an alkenylcarbonyloxymethyl group, such as an ethenylcarbonyloxymethyl group ($CH_2$=CH-C(=O)-O-$CH_2$-) and a 1-methyl ethenylcarbonyloxymethyl group ($CH_2$=C($CH_3$)-C(=O)-O-$CH_2$-).

The aryl group represented by $R^1$ to $R^4$ may be either monocyclic or polycyclic and preferably has 6 to 13 carbon atoms, and examples thereof include a phenyl group, a 1-naphthyl group, a 2-naphthyl group, an o-tolyl group, an m-tolyl group, a p-tolyl group and a xylyl group (dimethylphenyl group), and also include groups in which one or more hydrogen atoms of these aryl groups are further substituted with these aryl groups or the same alkyl groups as those exemplified above for $R^1$ to $R^4$. The aryl group having these substituents preferably has 6 to 13 carbon atoms including those of the substituents.

When any two or more of $R^1$ to $R^4$ are alkyl groups which may have a substituent, these two or more alkyl groups may be bonded to each other to form a ring together with the carbon atom to which each of these alkyl groups is bonded.

In this case, the position (carbon atom) at which these alkyl groups are bonded to each other is not particularly limited, but when the alkyl group having a substituent is forming a ring, a carbon atom at the site other than the substituent is bonded to a carbon atom of the other alkyl group.

Preferable examples of the position (carbon atom) at which two or more alkyl groups are bonded to each other include the terminal carbon atom of these alkyl groups (carbon atom of the methyl group).

The ring formed by bonding two or more alkyl groups to each other is a saturated aliphatic hydrocarbon group which may be either monocyclic or polycyclic, and is preferably a 5- to 10-membered ring.

Preferred examples of the structural unit (1)-1 in which any two or more of the alkyl groups represented by $R^1$ to $R^4$ are forming a ring include those in which, when either one or both of $R^1$ and $R^2$ are alkyl groups and either one or both of $R^3$ and $R^4$ are alkyl groups, one of the alkyl groups of $R^1$ and $R^2$ and one of the alkyl groups of $R^3$ and $R^4$ are bonded to each other to form a ring.

Examples of the substituent which the alkyl group, alkoxy group, alkenyl group, alkylcarbonyloxyalkyl group, alkenylcarbonyloxyalkyl group and aryl group represented by $R^1$ to $R^4$ may have include a hydroxy group, a carboxy group, a halogen atom, an alkoxy group, an alkenyl group, an alkenyloxy group, an aryl group, a heteroaryl group, an aryloxy group, a heteroaryloxy group, an alkylsilyl group, an alkylsilyloxy group, a carboxyalkylthio group and a hydroxyalkylthio group, and these substituents are the same as the above-mentioned substituents which the aliphatic hydrocarbon group may have.

The number of the substituents of the alkyl group, alkoxy group, alkenyl group, alkylcarbonyloxyalkyl group, alkenylcarbonyloxyalkyl group and aryl group described above is not particularly limited, and may be one, two or more, and all the hydrogen atoms may be substituted with a substituent. Further, the number of carbon atoms in the alkyl group, alkoxy group, alkenyl group, alkylcarbonyloxyalkyl group, alkenylcarbonyloxyalkyl group and aryl group having a substituent is preferably in the above range, including those of the substituent.

In the alkyl group, alkoxy group, alkenyl group, alkylcarbonyloxyalkyl group, alkenylcarbonyloxyalkyl group and aryl group, when the number of the substituents is 2 or more, these substituents may be the same or different from each other. That is, two or more substituents may all be the same or different from each other, or only some of them may be the same.

The bonding position of the substituent in the alkyl group, alkoxy group, alkenyl group, alkylcarbonyloxyalkyl group, alkenylcarbonyloxyalkyl group and aryl group described above is not particularly limited, although in the case of the alkyl group, for example, the terminal portion thereof (the carbon atom at the terminal on the opposite side of the carbon atom bonded to the ethylene group of the alkyl group) is preferable.

Examples of $R^1$ to $R^4$ having a substituent include, for example, if it is an alkyl group having a substituent, a hydroxyalkyl group having a hydroxy group as a substituent, a carboxyalkyl group having a carboxy group as a substituent, a haloalkyl group having a halogen atom as a substituent, an alkoxyalkyl group having an alkoxy group as a substituent, an alkenyloxyalkyl group having an alkenyloxy group as a substituent, an arylalkyl group (aralkyl group) having an aryl group as a substituent, a heteroarylalkyl group having a heteroaryl group as a substituent, an aryloxyalkyl group having an aryloxy group as a substituent, a heteroaryloxyalkyl group having a heteroaryloxy group as a substituent, an alkylsilylalkyl group having an alkylsilyl group as a substituent, an alkylsilyloxyalkyl group having an alkylsilyloxy group as a substituent, a carboxyalkylthioalkyl group having a carboxyalkylthio group as a substituent, and a hydroxyalkylthioalkyl group having a hydroxyalkylthio group as a substituent. An alkyl group having an alkenyl group as a substituent is itself an alkenyl group.

Also in the case where $R^1$ to $R^4$ other than an alkyl group have a substituent, those in which a hydrogen atom is similarly substituted with a substituent can be mentioned.

The substituent of the alkyl group, alkoxy group, alkenyl group, alkylcarbonyloxyalkyl group, alkenylcarbonyloxyalkyl group and aryl group described above is preferably either one or both of a group having a hydroxy group and a group having a carboxy group.

The group having a hydroxy group means a hydroxy group and a group composed of a hydroxy group and other groups.

The group having a carboxy group means a carboxy group and a group composed of a carboxy group and other groups.

Preferable examples of $R^1$ to $R^4$ having a carboxy group include an alkylcarbonyloxyalkyl group having a carboxyalkylthio group as a substituent (that is, a carboxyalkylthioalkylcarbonyloxyalkyl group).

Preferable examples of $R^1$ to $R^4$ having a hydroxy group include an alkylcarbonyloxyalkyl group having a hydroxyalkylthio group as a substituent (that is, a hydroxyalkylthioalkylcarbonyloxyalkyl group).

In the structural unit (1)-1, it is preferable that at least one or more of $R^1$ to $R^4$ is the aforementioned alkyl group, alkoxy group, alkenyl group, alkylcarbonyloxyalkyl group, alkenylcarbonyloxyalkyl group or aryl group which may have a substituent, and it is more preferable that at least either one or both of $R^1$ and $R^2$ is the aforementioned alkyl group, alkoxy group, alkenyl group, alkylcarbonyloxyalkyl group, alkenylcarbonyloxyalkyl group or aryl group which may have a substituent.

The structural unit of the aliphatic polycarbonate may consist of only one type, or two or more types, and when it consists of two or more types, the combination and ratio thereof can be appropriately selected depending on the purpose.

For example, in the case where the aliphatic polycarbonate has the structural unit (1)-1, the aliphatic polycarbonate may or may not have a structural unit other than the structural unit (1)-1. Further, the structural unit (1)-1 of the aliphatic polycarbonate may consist of only one type, or two or more types, and the structural unit other than the structural unit (1)-1 may also consist of only one type, or two or more types.

In the aliphatic polycarbonate, the ratio of the amount (number of moles) of the structural unit (1)-1 with respect to the total amount (number of moles) of the structural units is preferably 90 mol% or more, more preferably 95 mol% or more, still more preferably 97 mol% or more, particularly preferably 99 mol% or more, and may even be 100 mol%.

As noted herein above, the aliphatic polycarbonate underlying the pressure-sensitive adhesive of the present invention has an alkoxy group as a side chain, and the number of carbon atoms in the alkoxy group is, as described above, for example, preferably from 1 to 16 and, particularly preferably, from 4 to 8, from the viewpoint of achieving effects particularly remarkably, such as an even lower glass transition point (Tg), and further improvements in the properties as an adhesive component, including adhesive force and processability. For example, when the aliphatic polycarbonate has the structural unit (1)-1, at least one or more of $R^1$ to $R^4$ are preferably alkoxy groups, and at least either one or both of $R^1$ and $R^2$ are more preferably alkoxy groups. Further, at least one or more of $R^1$ to $R^4$ are preferably alkoxy groups that have 4 to 8 carbon atoms, and at least either one or both of $R^1$ and $R^2$ are more preferably alkoxy groups that have 4 to 8 carbon atoms.

As noted herein above, the aliphatic polycarbonate has a structural unit (i) having an alkoxy group and a structural unit (ii) having either or both of a hydroxy group and a carboxy group. Accordingly, in the case where the aliphatic polycarbonate only has the structural unit (1)-1, the aliphatic polycarbonate has both a structural unit in which at least one or more of $R^1$ to $R^4$ in the general formula (1)-1 are the above alkoxy groups, and a structural unit in which

at least one or more of $R^1$ to $R^4$ in the general formula (1)-1 are groups having a hydroxy group or a carboxy group .

The ratio of the amount of the structural unit (ii) with respect to the total amount of the structural unit (i) and the structural unit (ii) (i.e., [amount (mol) of structural unit (ii)] / {[amount (mol) of structural unit (i)] + [amount (mol) of structural unit (ii)]} × 100) is preferably from 0.05 to 20 mol%, and more preferably from 0.1 to 10 mol%. When the above-mentioned molar ratio is in such a range, the effect achieved by employing the aliphatic polycarbonate including the structural unit having a hydroxy group or a carboxy group is obtained more remarkably.

The weight average molecular weight (Mw) of the aliphatic polycarbonate is preferably 100,000 or more, more preferably 150,000 or more, and particularly preferably 200,000 or more.

Further, the aliphatic polycarbonate preferably has a weight average molecular weight of 2,000,000 or less, more preferably 1,000,000 or less, and particularly preferably 500,000 or less.

More specifically, it is preferably from 100,000 to 2,000,000, more preferably from 150,000 to 1,000,000, and still more preferably from 200,000 to 500,000.

When the weight average molecular weight of the aliphatic polycarbonate is equal to or more than the above lower limit value, the tackiness is improved, and when the weight average molecular weight is equal to or less than the upper limit value, the viscosity of the solution is reduced, and the coating properties are improved.

It should be noted that in the present specification, the "weight average molecular weight" is a value in terms of polystyrene measured by a gel permeation chromatography (GPC) method, unless otherwise specified.

The aliphatic polycarbonate preferably has a degree of dispersion (Mw / Mn) of 1.0 to 10.0, more preferably 1.0 to 6.0, and particularly preferably 1.0 to 4.2.

The glass transition point (Tg) of the aliphatic polycarbonate is 0°C or less, preferably -5°C or less, and particularly preferably -10°C or less. When the glass transition point of the aliphatic polycarbonate is not more than the above upper limit value, the adhesion performance such as the adhesive force of the pressure-sensitive adhesive and the initial tackiness is improved.

Further, the glass transition point (Tg) of the aliphatic polycarbonate is preferably -60°C or higher, more preferably -50°C or higher, and particularly preferably - 40°C or higher. When the glass transition point of the aliphatic polycarbonate is equal to or more than the above lower limit value, the pressure-sensitive adhesive does not become too soft under an environment of normal temperature, so that the occurrence of defects, such as the adhesion of the pressure-sensitive adhesive to the punching blade during punching of the pressure-sensitive adhesive, and the shift of a label pasted onto an adherend via the pressure-sensitive adhesive, is highly suppressed.

More specifically, the glass transition point is preferably from -60 to 0°C, more preferably from -50 to -5°C, and still more preferably from -40 to -10°C.

The aliphatic polycarbonate can be produced, for example, by a production method including a step of causing a polymerization reaction of carbon dioxide ($CO_2$) with a monomer polymerizing so that the main chain is composed of an aliphatic group in the presence of a metal catalyst, while controlling the water content to a predetermined amount or less, if necessary. For example, as shown below, the aliphatic polycarbonate having the structural unit (1)-1 can be produced by a production method including a step of causing a polymerization reaction of carbon dioxide with a compound (ethylene oxide (epoxide) or a derivative thereof) represented by the following general formula (1a)-1 (hereinafter abbreviated as "compound (1a)-1" in some cases) in the presence of a metal catalyst, while controlling the water content to a predetermined amount or less, if necessary (for example, see "International Patent Publication No. 2011/142259"). It should be noted that in the present specification, the term "monomer" means a compound that undergoes a polymerization reaction with carbon dioxide so that the main chain is composed of an aliphatic group, unless otherwise specified. Further, the term "derivative" means a compound in which one or more hydrogen atoms of the original compound are substituted with a group (substituent) other than a hydrogen atom, and as the "substituent" herein, the same substituents as those described above which $R^1$ to $R^4$ may have can be mentioned.

[Chemical Formula 4]

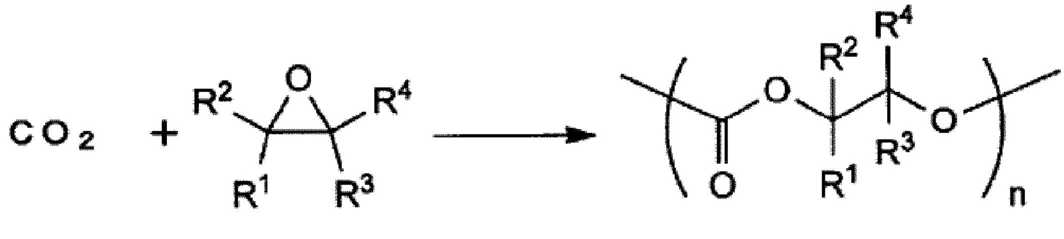

(1a) -1

(In the formula, $R^1$, $R^2$, $R^3$ and $R^4$ are the same as defined above; and n is an integer of 2 or more.)

In the formula, $R^1$ to $R^4$ are the same as $R^1$ to $R^4$ in the general formula (1)-1.

Further, n is an integer of 2 or more, and represents the number of the structural unit (1)-1 in the aliphatic polycarbonate.

Preferable examples of the compound (1a)-1 include ethylene oxide, propylene oxide, 1-butene oxide, 2-butene oxide, isobutylene oxide, 1-pentene oxide, 2-pentene oxide, 1-hexene oxide, 1-octene oxide, 1-decene oxide, cyclopentene oxide, cyclohexene oxide, styrene oxide, vinyl cyclohexene oxide, 3-phenyl propylene oxide, 3,3,3-trifluoropropylene oxide, 3-naphthyl propylene oxide, 3-phenoxypropylene oxide, 3 - naphthoxy propylene oxide, butadiene monoxide, 3-vinyloxypropylene oxide, 3-trimethylsilyloxypropylene oxide, 3-methoxypropylene oxide (methyl glycidyl ether), 3-ethoxypropylene oxide (ethyl glycidyl ether), 3-n-propoxypropylene oxide (n-propyl glycidyl ether), 3-n-butoxypropylene oxide (n-butyl glycidyl ether), glycidyl acrylate and glycidyl methacrylate.

Among them, the compound (1a)-1 is more preferably ethylene oxide, a derivative of ethylene oxide, propylene oxide or a derivative of propylene oxide from the viewpoint of having high polymerization reactivity with carbon dioxide, and propylene oxide and a derivative of propylene oxide are even more preferable.

n is preferably an integer of 2 to 10,000.

The monomer (for example, the compound (1a)-1) used in the step of conducting the polymerization reaction may consist of only one type, or two or more types, and when it consists of two or more types, the combination and ratio thereof may be appropriately adjusted depending on the purpose.

Examples of the metal catalyst include an aluminum catalyst, a zinc catalyst, and the like. Among them, the metal catalyst is preferably a zinc catalyst, and more preferably an organozinc catalyst, since it exhibits high polymerization activity in the polymerization reaction of carbon dioxide and the monomer.

Examples of the organozinc catalyst include organozinc catalysts such as zinc acetate, diethyl zinc and dibutyl zinc; and organozinc catalysts obtained by reacting one or two or more compounds selected from the group consisting of a primary amine, a divalent phenol, a divalent aromatic carboxylic acid, an aromatic hydroxy acid, an aliphatic dicarboxylic acid and an aliphatic monocarboxylic acid with a zinc compound.

The zinc compound is not particularly limited as long as it can perform the above-mentioned reaction, and examples thereof include inorganic zinc compounds such as zinc oxide, zinc hydroxide, zinc nitrate and zinc carbonate; and organozinc compounds such as diethyl zinc, zinc acetate and dibutyl zinc.

Among them, the zinc compound is preferably zinc oxide, zinc hydroxide or diethyl zinc because it shows higher polymerization activity.

One type of the above zinc compound may be used alone, or two or more types thereof may be used in combination. When two or more types of zinc compounds are used in combination, the combination and ratio thereof may be appropriately adjusted depending on the purpose.

The organozinc catalyst is preferably an organozinc catalyst obtained by reacting the zinc compound, aliphatic dicarboxylic acid and aliphatic monocarboxylic acid since it exhibits higher polymerization activity. For example, zinc glutarate is obtained by reacting zinc oxide and glutaric acid, although the organozinc catalyst is not limited thereto.

The amount of the metal catalyst used in the polymerization reaction is preferably from 0.001 to 20 parts by mass and more preferably from 0.01 to 14 parts by mass, with respect to 100 parts by mass of the monomer used. When the amount of the metal catalyst used is equal to or more than the above lower limit value, the polymerization reaction is more likely to proceed. Further, when the amount of the metal catalyst used is equal to or less than the above upper limit value, excessive use of the metal catalyst is suppressed, and the economic efficiency is improved.

The method of carrying out the polymerization reaction is not particularly limited as long as the desired product can be obtained, and examples thereof include a method in which the monomer, the metal catalyst and, if necessary, a solvent are charged into an autoclave and mixed, and then carbon dioxide is injected into the obtained mixture under pressure and reacted.

The solvent to be used as necessary in the polymerization reaction is not particularly limited.

Examples of the organic solvents among the above solvents include aliphatic hydrocarbons such as pentane, hexane, octane, decane and cyclohexane; aromatic hydrocarbons such as benzene, toluene and xylene; halogenated hydrocarbons such as chloromethane, dichloromethane, chloroform, carbon tetrachloride, 1,1-dichloroethane, 1,2-dichloroethane, chloroethane, trichloroethane, 1-chloropropane, 2-chloropropane, 1-chlorobutane, 2-chlorobutane, 1-chloro-2-methylpropane, chlorobenzene and bromobenzene; carboxylic acid esters such as ethyl acetate and propyl acetate; and carbonic acid esters such as dimethyl carbonate, diethyl carbonate and propylene carbonate.

The amount of the solvent to be used is preferably from 100 to 10,000 parts by mass with respect to 100 parts by mass of the monomer used, from the viewpoint that the polymerization reaction is more likely to proceed.

The pressure at the time of injecting carbon dioxide in the polymerization reaction is not particularly limited, but it is preferably from 0.1 to 20 MPa, more preferably from 0.1 to 10 MPa, and still more preferably from 0.1 to 5 MPa. When the pressure at the time of injecting carbon dioxide is equal to or more than the above lower limit value, the polymerization reaction is more likely to proceed. Further, when the pressure at the time of injecting carbon dioxide is

equal to or less than the above upper limit value, excessive use of carbon dioxide is suppressed, and the economic efficiency is improved.

During the polymerization reaction, the amount of water in the reaction system is preferably 5 mol% or less and more preferably 4.5 mol% or less, with respect to the amount of the metal catalyst used (100 mol%). The amount of water in the reaction system during the polymerization reaction can be measured using, for example, a Karl Fischer moisture meter. The amount of water in the reaction system can be adjusted, for example, by a known method such as a method using a desiccant.

The reaction temperature during the polymerization reaction is not particularly limited, but it is preferably from 20 to 100°C, and more preferably from 40 to 80°C. When the reaction temperature is equal to or more than the above lower limit value, the polymerization reaction is completed within a shorter period of time. In addition, when the reaction temperature is equal to or less than the above upper limit value, side reactions are suppressed, and the yield of the aliphatic polycarbonate is improved.

The reaction time of the polymerization reaction may be appropriately adjusted according to the reaction temperature, but it is preferably from 2 to 40 hours.

Among the aforementioned aliphatic polycarbonates, those having either one or both of a hydroxy group and a carboxy group can be suitably produced, for example, by the following manner. A polymerization reaction is carried out using those having a polymerizable unsaturated bond (C=C), such as the aforementioned alkenyl groups, as at least a part of the aforementioned monomers, thereby producing an aliphatic polycarbonate corresponding to an intermediate having a polymerizable unsaturated bond in the side chain. Then the aliphatic polycarbonate is reacted with a compound having either one or both of a hydroxy group and a carboxy group and also a group capable of causing an addition reaction with the polymerizable unsaturated bond such as a mercapto group (hereinafter sometimes abbreviated as "addition compound"), thereby subjecting the compound to an addition reaction with the polymerizable unsaturated bond in the aliphatic polycarbonate.

Examples of the monomer having a polymerizable unsaturated bond, such as the aforementioned alkenyl group, include glycidyl acrylate, and glycidyl methacrylate.

Examples of the addition compound include a carboxyalkylthiol (a compound in which hydrogen atoms of an alkane are substituted with a carboxy group and a mercapto group (-SH)), and a hydroxyalkylthiol (a compound in which hydrogen atoms of an alkane are substituted with a hydroxy group and a mercapto group (-SH)).

The aliphatic polycarbonate corresponding to the above intermediate can be produced in the same manner as in the case of the aliphatic polycarbonate which is the desired product described earlier.

The amount of the addition compound used during the addition reaction may be appropriately adjusted in accordance with the amount of the polymerizable unsaturated bond in the aliphatic polycarbonate corresponding to the intermediate, and is not particularly limited, but it is usually preferably from 1 to 10 times by mole, and more preferably from 1 to 6 times by mole, with respect to the number of moles of the polymerizable unsaturated bond in the aliphatic polycarbonate.

The addition reaction is preferably carried out using a known radical initiator such as azobisisobutyronitrile, 2,2'-azobis(2,4-dimethylvaleronitrile) or the like from the viewpoint of improving the reaction rate.

Further, from the viewpoint that the production process can be simplified, the addition reaction is preferably carried out using a solvent similar to the solvent used in the polymerization reaction.

The amounts of the polymerization initiator and the solvent to be used may be appropriately adjusted.

The reaction temperature and the reaction time during the addition reaction are not particularly limited, and, for example, may be the same as the reaction temperature and the reaction time during the polymerization reaction.

The addition reaction can be carried out, for example, by directly adding the aforementioned addition compound to the reaction solution after the polymerization reaction, or to the reaction solution which has been further subjected to a known post-processing operation as required.

For example, when the aliphatic polycarbonate has the structural unit (1)-1 in which one or more of $R^1$ to $R^4$ is a carboxyalkylthioalkylcarbonyloxyalkyl group, such an aliphatic polycarbonate can be produced by using a compound (1a)-1 in which one or more of $R^1$ to $R^4$ is an alkenylcarbonyloxyalkyl group as at least a part of the monomer and using a carboxyalkylthiol as the addition compound to carry out the above process.

Similarly, when the aliphatic polycarbonate has the structural unit (1)-1 in which one or more of $R^1$ to $R^4$ is a hydroxyalkylthioalkylcarbonyloxyalkyl group, such an aliphatic polycarbonate can be produced by using a compound (1a)-1 in which one or more of $R^1$ to $R^4$ is an alkenylcarbonyloxyalkyl group as at least a part of the monomer and using a hydroxyalkylthiol as the addition compound to carry out the above process.

After completion of the polymerization reaction or addition reaction, a known post-processing operation is carried out, if necessary, and then the aliphatic polycarbonate which is the desired product can be taken out by a known method. Further, the obtained aliphatic polycarbonate may be purified as necessary.

Although very few aliphatic polycarbonates having a low glass transition point (Tg) have been produced conventionally, an aliphatic polycarbonate having a low glass transition point and having properties suitable as an adhesive

component can be obtained by the production method using the monomer described above.

Although carbon dioxide is a causative substance of global warming, on the other hand, it is discharged in various industrial fields on a daily basis, and reduction in the amount of emission on a global scale is required. On the other hand, the above-mentioned manufacturing method is excellent in that, since carbon dioxide is used as a raw material, carbon dioxide can be immobilized, and also the number of alternative carbon resources increases.

The aliphatic polycarbonate contained in the pressure-sensitive adhesive according to the present invention may consist of only one type, or two or more types, and when it consists of two or more types, the combination and ratio thereof can be arbitrarily selected depending on the purpose.

(Solvent)

In addition to the above aliphatic polycarbonate, the pressure-sensitive adhesive according to the present invention preferably contains a solvent. By including a solvent, physical properties such as fluidity and viscosity of the pressure-sensitive adhesive can be easily adjusted.

The solvent is not particularly limited and can be appropriately selected depending on the purpose, and examples thereof include esters such as ethyl acetate and butyl acetate; ketones such as methyl isobutyl ketone, methyl ethyl ketone and cyclohexanone; and aromatic hydrocarbons such as toluene and xylene.

The content of the solvent in the pressure-sensitive adhesive is not particularly limited and may be appropriately adjusted depending on the purpose, but it is preferably from 100 to 1,000 parts by mass, and more preferably from 100 to 400 parts by mass with respect to 100 parts by mass of the aliphatic polycarbonate content.

In the pressure-sensitive adhesive, the ratio of the content of the aliphatic polycarbonate with respect to the total content of components other than the solvent (total content of solid content (nonvolatile content)) is preferably 80% by mass or more, more preferably 90% by mass or more, still more preferably 95% by mass or more, particularly preferably 97% by mass or more, most preferably 99% by mass or more, and may even be 100% by mass (the pressure-sensitive adhesive may not contain components other than the aliphatic polycarbonate and the solvent, that is, other components to be described later herein). When the ratio of the content is in such a range, the effect of using the aliphatic polycarbonate as the adhesive component is obtained more remarkably.

(Other components)

The pressure-sensitive adhesive according to the present invention may contain other components apart from the aliphatic polycarbonate and the solvent. The other components may be either an adhesive component or a non-adhesive component.

The other components contained in the pressure-sensitive adhesive may consist of only one type, or two or more types, and when it consists of two or more types, the combination and ratio thereof can be arbitrarily selected depending on the purpose.

Examples of the other components that are adhesive components include known adhesive components other than an aliphatic polycarbonate, and more specifically, an acrylic resin, rubber, a urethane resin, a silicone resin can be mentioned.

Examples of the other components that are non-adhesive components include various additives known in the field of pressure-sensitive adhesives, such as a crosslinking agent, a tackifier, an antioxidant, an ultraviolet absorber, a dye, a pigment, a deterioration inhibitor, an antistatic agent, a flame retardant, a light stabilizer, a softening agent, a silane coupling agent and a filler.

However, in the pressure-sensitive adhesive according to the present invention, since the aliphatic polycarbonate has sufficient adhesive force, a pressure-sensitive adhesive sheet having sufficient adhesive force can be obtained without using a tackifier.

Preferred examples of the pressure-sensitive adhesive according to the present invention include those containing a crosslinking agent as the other component. By using such a pressure-sensitive adhesive, a pressure-sensitive adhesive layer (to be described later herein) having more excellent adhesive force and removability can be easily obtained.

Examples of the crosslinking agent include an epoxy-based crosslinking agent, an isocyanate-based crosslinking agent, an aziridine-based crosslinking agent and a metal chelate-based crosslinking agent.

Examples of the epoxy-based crosslinking agent include ethylene glycol diglycidyl ether, 1,6-hexanediol diglycidyl ether, trimethylolpropane diglycidyl ether, diglycidyl aniline and diglycidyl amine.

Examples of the isocyanate-based crosslinking agent include tolylene diisocyanate (TDI), hexamethylene diisocyanate (HMDI), isophorone diisocyanate (IPDI), xylylene diisocyanate (XDI), hydrogenated tolylene diisocyanate, diphenylmethane diisocyanate and trimethylolpropane-modified tolylene diisocyanate (trimethylolpropane-modified TDI).

Examples of the aziridine-based crosslinking agent include trimethylolpropane-tri-β-aziridinyl propionate, and

bisisophthaloyl-1-(2-methylaziridine).

Examples of the metal chelate-based crosslinking agent include chelate compounds composed of a divalent or higher valent metal such as aluminum, copper, iron, tin, zinc, titanium, nickel, antimony, magnesium, vanadium, chromium and zirconium, and acetylacetone or an acetoacetic ester.

In the pressure-sensitive adhesive, the ratio of the content of the other components with respect to the total content of the aliphatic polycarbonate and the other components is preferably 20% by mass or less, more preferably 10% by mass or less, still more preferably 5% by mass or less, particularly preferably 3% by mass or less, most preferably 1% by mass or less, and may even be 0% by mass (if the pressure-sensitive adhesive does not contain the other components). When the ratio of the content is in such a range, the effect of using the aliphatic polycarbonate as the adhesive component is obtained more remarkably.

For example, when a crosslinking agent is used as the other component, the ratio of the content of the crosslinking agent with respect to the total content of the aliphatic polycarbonate and the crosslinking agent is preferably 0.05% by mass or more, more preferably 0.1% by mass or more, and still more preferably 0.2% by mass or more. Further, the ratio of the content of the crosslinking agent with respect to the total content of the aliphatic polycarbonate and the crosslinking agent is preferably 10% by mass or less, more preferably 5% by mass or less, and still more preferably 1% by mass or less. More specifically, it is preferably from 0.05 to 10% by mass, more preferably from 0.1 to 5% by mass, and still more preferably from 0.2 to 1% by mass.

When the pressure-sensitive adhesive according to the present invention contains components other than the aliphatic polycarbonate, it can be obtained by blending the respective components.

At the time of blending the respective components, all the components may be added and then these may be mixed, a part of the components may be mixed while being added sequentially, or all the components may be mixed while being added sequentially.

Further, in the case of using a solvent, all the components in the pressure-sensitive adhesive may be dissolved, or some or all of the components may not be dissolved, although it is preferable that undissolved components are uniformly dispersed.

The temperature at the time of blending and the duration of blending each component is not particularly limited, but it is preferable that the temperature is from 15 to 30°C and the duration is from 1 to 60 minutes, for example.

The pressure-sensitive adhesive of the present invention preferably contains the aliphatic polycarbonate as described herein above, a crosslinking agent and a solvent.

The pressure-sensitive adhesive of the present invention preferably contains an aliphatic polycarbonate having a structural unit represented by the above general formula (1)-1, an epoxy-based crosslinking agent, an aromatic hydrocarbon and a carboxylic acid ester.

The pressure-sensitive adhesive of the present invention preferably contains the aliphatic polycarbonate as described herein above, an epoxy-based crosslinking agent, an aromatic hydrocarbon and a carboxylic acid ester,
wherein the aliphatic polycarbonate contains a structural unit having an alkoxy group and a structural unit having a carboxyl group.

The pressure-sensitive adhesive of the present invention preferably contains the aliphatic polycarbonate as described herein above, an epoxy-based crosslinking agent, toluene and ethyl acetate,
wherein the aliphatic polycarbonate contains a structural unit having an n-butoxy group and a structural unit having a carboxyl group.

<Pressure-sensitive adhesive sheet>

The pressure-sensitive adhesive sheet according to the present invention is provided with a pressure-sensitive adhesive layer including the pressure-sensitive adhesive according to the present invention as described above.

The pressure-sensitive adhesive layer may be formed into a layer shape using the aforementioned pressure-sensitive adhesive, and can be formed, for example, when a pressure-sensitive adhesive containing a solvent is used, by applying the pressure-sensitive adhesive to a target portion and dried.

The pressure-sensitive adhesive may be applied by any known method, and examples of the method include a method using various coaters such as an air knife coater, a blade coater, a bar coater, a gravure coater, a roll coater, a roll knife coater, a curtain coater, a die coater, a knife coater, a screen coater, a Meyer bar coater and a kiss coater.

The thickness of the pressure-sensitive adhesive layer can be appropriately selected depending on the purpose, but it is preferably from 1 to 100 μm, more preferably from 1 to 60 μm, and particularly preferably from 1 to 30 μm.

The thickness of the pressure-sensitive adhesive layer can be adjusted, for example, by adjusting the coating amount of the pressure-sensitive adhesive and the concentration of the solid content (nonvolatile content) of the pressure-sensitive adhesive.

It should be noted that the thickness of the pressure-sensitive adhesive layer can be measured using a constant pressure thickness gauge (manufactured by TECLOCK CORPORATION).

The pressure-sensitive adhesive sheet is usually configured by providing the pressure-sensitive adhesive layer on a substrate sheet.

The material of the substrate sheet is not particularly limited, but preferable examples thereof include paper and resins.

Examples of the paper include polyethylene laminated paper, polypropylene laminated paper, clay coated paper, resin coated paper, glassine paper, wood free paper and synthetic paper.

Examples of the resin include polyethylene (low density polyethylene (LDPE), linear low density polyethylene (LLDPE), high density polyethylene (HDPE)), polypropylene, polybutene, polybutadiene, polymethylpentene, styrene-ethylenebutylene-styrene block copolymers, polyvinyl chloride, vinyl chloride copolymers, polyethylene terephthalate, polybutylene terephthalate, polyurethane, polyurethane acrylate, polyimide, ethylene vinyl acetate copolymers, ionomer resins, ethylene-(meth)acrylic acid copolymers, ethylene-(meth)acrylic acid ester copolymers, polystyrene, polycarbonate, fluororesins, and hydrogenated products, modified products, crosslinked products or copolymerized products of any of these resins.

The substrate sheet may be composed of one layer (single layer) or a plurality of layers of two or more layers. In the case where the substrate sheet is composed of a plurality of layers, the materials of the respective layers may all be the same, may all be different, or only a portion thereof may be the same.

The thickness of the substrate sheet can be appropriately selected depending on the purpose, but it is preferably from 5 to 300 μm, and more preferably from 10 to 150 μm. In the case where the substrate sheet is composed of a plurality of layers, it is preferable that the total thickness of all the layers is within such a numerical range.

Further, the pressure-sensitive adhesive sheet is preferably configured to include a release film on the pressure-sensitive adhesive layer. In other words, the pressure-sensitive adhesive sheet preferably includes a substrate sheet, a pressure-sensitive adhesive layer and a release film laminated in this order.

FIG. 1 is a cross-sectional view schematically showing an example of an embodiment of such a pressure-sensitive adhesive sheet according to the present invention.

The pressure-sensitive adhesive sheet 1 shown here includes a substrate sheet 11, a pressure-sensitive adhesive layer 12 and a release film 13 laminated in this order. The pressure-sensitive adhesive layer 12 is provided on the entire surface of a front surface 11a of the substrate sheet 11. Further, the release film 13 is provided so as to cover the entire surface of a front surface 12a of the pressure-sensitive adhesive layer 12. It should be noted that, although a release layer of the release film 13 is provided on a contact surface of the release film 13 with the pressure-sensitive adhesive layer 12, the illustration is omitted here.

However, the pressure-sensitive adhesive sheet according to the present invention is not limited to the one shown in FIG. 1, and may be one in which a part of the configuration is changed or omitted, or another configuration is added within a range that does not impair the effects of the present invention. For example, in FIG. 1, although the pressure-sensitive adhesive layer 12 is provided over the entire surface of the front surface 11a of the substrate sheet 11, it may be provided only in a partial region of the front surface 11a of the substrate sheet 11. In that case, the pressure-sensitive adhesive layer 12 may be patterned into a predetermined shape. Further, it may be a pressure-sensitive adhesive sheet in which the substrate sheet 11 and the release film 13 are omitted as shown in FIG. 2, or may be a pressure-sensitive adhesive sheet in which the release film 13 is omitted as shown in FIG. 3.

The release film may be a known release film, and may be, for example, one usually used in the field of pressure-sensitive adhesive sheets or adhesive tapes. Examples of a preferable release film include those obtained by providing a release layer on the surface of a substrate film, a film substrate containing a loading material such as a filler, or those obtained by providing a release layer on the surface of a film substrate containing a loading material such as a filler.

As the substrate film, for example, the same as the substrate sheet described above can be mentioned.

As the release layer, for example, those containing a release agent such as a silicone resin (a resin having a silicon atom in the main chain), an alkyd resin, a long chain alkyl-based resin (a resin having a long chain alkyl group) and a fluororesin (a resin having a fluorine atom) can be mentioned.

The thickness of the release film is not particularly limited, and may be appropriately adjusted.

The pressure-sensitive adhesive sheet in which a substrate sheet, a pressure-sensitive adhesive layer and a release film are laminated in this order can be produced, for example, by applying, and drying, if necessary, the pressure-sensitive adhesive on the surface of the substrate sheet to form a pressure-sensitive adhesive layer, and then pasting together the surface (exposed surface) of this pressure-sensitive adhesive layer on the side opposite to the substrate sheet and the surface of the release film (the surface of the release layer).

Further, the pressure-sensitive adhesive sheet in which a substrate sheet, a pressure-sensitive adhesive layer and a release film are laminated in this order can also be produced, for example, by applying, and drying, if necessary, the pressure-sensitive adhesive on the surface of the release film (the surface of the release layer) to form a pressure-sensitive adhesive layer, and then pasting together the surface of this pressure-sensitive adhesive layer on the side opposite to the release film and the surface of the substrate sheet.

In these production methods, the pressure-sensitive adhesive may be applied by the method described above.

Further, in these production methods, steps other than those described above may be added as necessary.

The pressure-sensitive adhesive layer in the pressure-sensitive adhesive sheet has sufficient adhesive force and removability by using the pressure-sensitive adhesive. Further, it is possible to make the pressure-sensitive adhesive layer excellent, for example, also in terms of a holding force for maintaining a state of being pasted onto an adherend for a prolonged period of time, and adhesion to a substrate sheet by which detachment from the substrate sheet is suppressed.

Although the applications of the pressure-sensitive adhesive sheet of the present invention are not particularly limited, it can also be used in, for example, commodities such as adhesive tapes, double-sided tapes and pressure-sensitive adhesive labels; housing materials such as wallpaper, floor tiles, floor sheets (cushion floor), carpets, ceiling materials, pressure-sensitive adhesive sheets for windows (for example, heat insulating sheets, reflection sheets, or crime prevention sheets); automobile products; home electric appliances; and electronic parts.

[Examples]

Hereinafter, the present invention will be described in more detail with reference to specific examples. However, the present invention is not limited in any way by the following examples.

[Production Example 1]

<Production of aliphatic polycarbonate>

A system of 1 L autoclave equipped with a stirrer, a gas inlet tube and a thermometer was purged with a nitrogen atmosphere in advance, and then a toluene slurry solution containing zinc glutarate as a metal catalyst (174.6 g, containing 0.2 mol of zinc glutarate), ethyl acetate (358.8 g), n-butyl glycidyl ether (368 g, 2.83 mol) and glycidyl methacrylate (6.1 g, 0.04 mol) were charged thereinto. Next, carbon dioxide gas was added while stirring the obtained mixture, and carbon dioxide gas was charged until the pressure inside the reaction system reached 1 MPa. Thereafter, the temperature was raised to 60°C, and a polymerization reaction was carried out for 30 hours while supplying carbon dioxide consumed by the reaction. After completion of the reaction, the autoclave was cooled and depressurized, the contents were diluted with ethyl acetate (358.8 g), and the insoluble catalyst was removed by filtration. Analysis of a portion of the obtained ethyl acetate solution revealed that the amount of the methacrylic group introduced was 1.5 mol% with respect to the total number of moles of n-butyl glycidyl ether and glycidyl methacrylate consumed by the reaction, the amount of the n-butoxy group introduced was 98.5 mol% with respect to the total number of moles of n-butyl glycidyl ether and glycidyl methacrylate consumed by the reaction, the weight average molecular weight was 215,000, the degree of dispersion was 5.47, and the glass transition point was -20°C.

This ethyl acetate solution was transferred into a 2 L separable flask equipped with a stirrer, a gas inlet tube and a thermometer, and after replacement with a nitrogen atmosphere, 3-mercaptopropionic acid (15.2 g, 0.144 mol) and 2,2'-azobis(2,4-dimethylvaleronitrile) (6.7 g, 0.027 mol) were charged thereinto to carry out the reaction at 60°C for 10 hours. After completion of the reaction, ethyl acetate was removed by distillation, and the resin remaining in the flask was washed with methanol and water and dried to obtain an aliphatic polycarbonate (A1). As a result of analyzing the obtained aliphatic polycarbonate (A1), the amount of the carboxy group introduced was 1.5 mol% with respect to the total number of moles of n-butyl glycidyl ether and glycidyl methacrylate consumed by the polymerization reaction, the amount of the n-butoxy group introduced was 98.5 mol% with respect to the total number of moles of n-butyl glycidyl ether and glycidyl methacrylate consumed by the polymerization reaction, the weight average molecular weight was 203,000, the degree of dispersion was 4.01, and the glass transition point was -15°C.

Here, the above-mentioned weight average molecular weight (Mw) is the weight average molecular weight in terms of polystyrene measured by gel permeation chromatography (GPC) under the following conditions (GPC measurement).

<Measurement conditions>

- GPC measurement apparatus: "HLC-8020" manufactured by Tosoh Corporation
- GPC columns (passed in the following order): All manufactured by Tosoh Corporation

  TSK guard column HXL-H
  TSK gel GMHXL (× 2)
  TSK gel G2000 HXL

- Measuring solvent: tetrahydrofuran
- Measuring temperature: 40°C

In addition, the glass transition point was determined by conducting a measurement for an object using a differential scanning calorimeter (DSC) "PYRIS Diamond DSC" manufactured by PerkinElmer, Inc. at a temperature increasing/decreasing rate of 10°C/min with a temperature profile from -70°C to 25°C, and confirming the inflection point at that time.

[Example 1]

<Production of pressure-sensitive adhesive sheet>

(Production of pressure-sensitive adhesive)

An ethyl acetate solution in which the concentration of the aliphatic polycarbonate (A1) obtained in Production Example 1 was 50% by mass (100 parts by mass, 50 parts by mass as the aliphatic polycarbonate (A1)) and an epoxy-based crosslinking agent solution (3 parts by mass) ("TC -5" manufactured by Taisei Kayaku Co., Ltd., concentration: 5% by mass, solvent component: toluene, hereinafter, a crosslinking agent included may be abbreviated as "crosslinking agent (B1)") were blended, and the mixture was stirred at room temperature for 30 minutes to obtain a pressure-sensitive adhesive in the form of a solution. Table 1 shows each component and the added amount thereof (solid content).

(Production of pressure-sensitive adhesive sheet)

A polyethylene terephthalate film ("SP-PET 381031" manufactured by Lintec Corporation, thickness: 38 μm) where one side has been subjected to a release treatment through a silicone treatment was used as a release film, and the pressure-sensitive adhesive obtained above was applied to the release-treated surface and dried at 100°C for 1 minute to form a pressure-sensitive adhesive layer having a thickness of 20 μm. At this time, the amount of the pressure-sensitive adhesive layer formed on the release film was 20 $g/m^2$.

Subsequently, a polyethylene terephthalate substrate sheet having a thickness of 50 μm was pasted onto the surface (exposed surface) of the pressure-sensitive adhesive layer to obtain a pressure-sensitive adhesive sheet. At the time of the following evaluation, the obtained pressure-sensitive adhesive sheet was used with the release film being peeled off.

<Evaluation of pressure-sensitive adhesive sheet>

The pressure-sensitive adhesive sheet obtained as described above was evaluated as follows.

(Adhesive force)

The pressure-sensitive adhesive sheet was cut into a size of 25 mm × 300 mm in an environment at a temperature of 23°C and a relative humidity of 50% to prepare a test piece of the pressure-sensitive adhesive sheet. Subsequently, the release film was peeled off from the pressure-sensitive adhesive sheet test piece by a size of 25 mm × 150 mm, and the exposed surface (25 mm × 150 mm) of the pressure-sensitive adhesive layer was pasted onto the surface of an adherend to prepare a sample for evaluating the adhesive force. As the adherend, 3 types of materials including stainless steel (SUS304 #360 (obtained by polishing the surface of SUS 304 30 times back and forth using waterproof abrasive paper #360)), polypropylene (hereinafter sometimes abbreviated as "PP") and polycarbonate (hereinafter sometimes abbreviated as "PC") were used.

Two such samples for adhesive force evaluation were prepared for each adherend, and all of them were allowed to stand at 23°C for 24 hours after preparation. Then, the adhesive force (N / 25 mm) of the pressure-sensitive adhesive layer was measured by a 180° peeling method at a tension rate of 300 mm / min, and the average value thereof was calculated as the adhesive force "after 24 hours" (N / 25 mm). The results are shown in Table 1.

It should be noted that "Cf" in the column of "adhesive force" in Table 1 means that cohesive failure of the pressure-sensitive adhesive layer was observed.

(Holding force)

The surface of the pressure-sensitive adhesive layer of the pressure-sensitive adhesive sheet was pasted onto the surface of a stainless steel (SUS 304 #360) plate. At this time, the area of the surface of the pressure-sensitive

adhesive layer to be pasted onto the surface of the stainless steel plate was made to be 25 mm × 25 mm in size. As described above, two stainless steel plates with a pressure-sensitive adhesive sheet attached thereto were prepared, and after being allowed to stand for 15 minutes in an environment at a temperature of 23°C and a relative humidity of 50%, they were set in a creep testing machine and allowed to stand for another 15 minutes in this state. Subsequently, a load of 9.8 N was applied to the pressure-sensitive adhesive sheet in an environment of 40°C, and the time (up to 70,000 seconds) until the pressure-sensitive adhesive sheet was dropped was measured in accordance with the method for measuring the holding force of JIS Z 0237 as the holding force (seconds) of the pressure-sensitive adhesive layer. The results are shown in Table 1.

It should be noted that "NC" and "Cf" in the columns of "holding force" in Table 1 have the following meanings, respectively.

NC (Non creep): Not only the pressure-sensitive adhesive sheet did not drop even when it exceeded 70,000 seconds at the time of measuring the holding force, but also there was no shift in the position of the pressure-sensitive adhesive sheet attached to the stainless steel plate.

Cf (Cohesive failure): Cohesive failure of the pressure-sensitive adhesive layer was observed.

(Removability)

The pressure-sensitive adhesive sheet was cut into a size of 20 mm × 40 mm in an environment at a temperature of 23°C and a relative humidity of 50% to prepare a test piece of the pressure-sensitive adhesive sheet. Subsequently, the entire surface of the pressure-sensitive adhesive layer of the pressure-sensitive adhesive sheet test piece was pasted onto the surface of an adherend and allowed to stand for 30 minutes as it was. As the adherend, one composed of a material of polypropylene (PP) was used. Subsequently, the adherend onto which the adhesive sheet test piece was attached was allowed to stand for 168 hours in an atmosphere at a temperature of 70°C, and then further allowed to stand for 24 hours in an environment of a temperature of 23°C and a relative humidity of 50%. Subsequently, the pressure-sensitive adhesive sheet test piece was peeled off from the adherend in the same environment (in an environment of a temperature of 23°C and a relative humidity of 50%), and the removability of the pressure-sensitive adhesive layer was evaluated by visually observing the surface of the adherend after peeling and focusing on the presence and degree of adhesion of the pressure-sensitive adhesive on the surface.

Then, the case where the removability was satisfactory was evaluated as "A", and the case where the removability was unsatisfactory was evaluated as "B". The results are shown in Table 1.

It should be noted that "Zip" in the column of "Removability" in Table 1 means that the so-called zipping, in which the pressure-sensitive adhesive layer is peeled off while its movement is stopped, has occurred.

(Adhesion to substrate sheet)

The surface of the pressure-sensitive adhesive layer after peeling off the release film from the pressure-sensitive adhesive sheet after storage at room temperature for 7 days from immediately after production was rubbed a plurality of times with a finger, and the presence and degree of detachment of the pressure-sensitive adhesive layer at that time were evaluated according to the following criteria as substrate sheet adhesion "at room temperature, after 7 days". The results are shown in Table 1.

Further, the evaluation was carried out in the same manner as described above except that the pressure-sensitive adhesive sheet stored for 3 days from immediately after production in an environment of a temperature of 60°C and a relative humidity of 95% was used instead of the pressure-sensitive adhesive sheet after being stored for 7 days as described above, and was defined as the substrate sheet adhesion "at 60°C and 95% RH, after 3 days". The results are shown in Table 1.

- Evaluation criteria

5: The pressure-sensitive adhesive layer did not detach from the substrate sheet at all.
4: A very small amount of the pressure-sensitive adhesive layer was detached from the substrate sheet.
3: A small amount of the pressure-sensitive adhesive layer was detached from the substrate sheet.
2: The pressure-sensitive adhesive layer was detached from the substrate sheet relatively easily.
1: The pressure-sensitive adhesive layer was easily detached from the substrate sheet.
* The numbers 5, 4, 3, 2 and 1 indicate that the degree of adhesion to the substrate sheet increases in this order.

(Haze)

After peeling off the release film from the pressure-sensitive adhesive sheet, the diffuse transmittance (Td) (%) and total light transmittance (Tt) (%) were measured using an integrating spherical light transmittance measuring device ("NDH-2000" manufactured by Nippon Denshoku Industries Co., Ltd.) in accordance with JIS K 7105. Then, the haze (%) was calculated by the following formula.

$$\text{Haze}\ (\%) = \text{Td} / \text{Tt} \times 100$$

[Example 2]

<Production and evaluation of pressure-sensitive adhesive sheet>

A pressure-sensitive adhesive sheet was prepared and evaluated in the same manner as in Example 1 except that the added amount of the epoxy-based crosslinking agent solution was changed to 6 parts by mass instead of 3 parts by mass (as shown in Table 1, the added amount of the crosslinking agent (B1) was changed to 0.30 parts by mass instead of 0.15 parts by mass) at the time of producing the pressure-sensitive adhesive. The results are shown in Table 1.

[Example 3]

<Production and evaluation of pressure-sensitive adhesive sheet>

A pressure-sensitive adhesive sheet was prepared and evaluated in the same manner as in Example 1, except that the added amount of the epoxy-based crosslinking agent solution was changed to 1 part by mass instead of 3 parts by mass (as shown in Table 1, the added amount of the crosslinking agent (B1) was changed to 0.05 parts by mass instead of 0.15 parts by mass) at the time of producing the pressure-sensitive adhesive. The results are shown in Table 1.

[Table 1]

| | | | Ex. 1 | Ex. 2 | Ex. 3 |
|---|---|---|---|---|---|
| Material of substrate sheet | | | Polyethylene terephthalate | | |
| Added components of pressure-sensitive adhesive | | Adhesive component (parts by mass) | Aliphatic polycarbonate (A1) (50) | | |
| | | Crosslinking agent (parts by mass) | Crosslinking agent (B1) (0.15) | Crosslinking agent (B1) (0.30) | Crosslinking agent (B1) (0.05) |
| Evaluation results | Adhesive force (N / 25 mm) | SUS304 #360 | 16.6 | 13.3 | 23.9 (Cf) |
| | | PP | 0.7 | 0.4 | 1.7 |
| | | PC | 15.5 | 13.8 | 24.0 (Cf) |
| | Holding force (seconds) | | 70000 (NC) | 70000 (NC) | 5080 (Cf) |
| | | | 70000 (NC) | 70000 (NC) | 3580 (Cf) |
| | Removability | PP | A (Zip) | A (Zip) | A (Zip) |
| | Adhesion to substrate sheet | At room temperature, 7 days later | 4 | 4 | 4 |
| | | At 60°C and 95% RH, 3 days later | 5 | 5 | 3 |
| | Haze (%) | | 1.52 | 1.71 | 1.61 |

As is apparent from the above results, it was confirmed that all of the pressure-sensitive adhesive layers in the

pressure-sensitive adhesive sheets of Examples 1 to 3 exhibited favorable tackiness, and the aliphatic polycarbonate (A1) sufficiently functioned as an adhesive component. More specifically, it can be described as follows.

All of the pressure-sensitive adhesive layers of Examples 1 to 3 had a large adhesive force after standing for 24 hours and had a sufficient adhesive force, even when some time had passed after being attached to the adherend, regardless of the material of the adherend.

Both of the pressure-sensitive adhesive layers of Examples 1 and 2 exhibited excellent holding force in that, not only the pressure-sensitive adhesive sheet did not drop even when the measuring time exceeded 70,000 seconds at the time of evaluating the holding force, but also there was no shift in the position of the pressure-sensitive adhesive sheet attached to the stainless steel plate.

On the other hand, the pressure-sensitive adhesive layer of Example 3 had a holding force of 5,080 seconds, and this also caused no problem at all in actual use.

In all of the pressure-sensitive adhesive layers of Examples 1 to 3, although the zipping occurred, the removability was satisfactory.

In all of the pressure-sensitive adhesive layers of Examples 1 to 3, adhesion to the substrate sheet "at room temperature, after 7 days" was high.

Further, both of the pressure-sensitive adhesive layers of Examples 1 and 2 had even higher adhesion to the substrate sheet "at 60°C and 95% RH, after 3 days", and the adhesion to the substrate sheet increased with the elapse of time by heating and humidification. On the other hand, the pressure-sensitive adhesive layer of Example 3 exhibited slightly lower adhesion to the substrate sheet "at 60°C and 95% RH, after 3 days", and the adhesion to the substrate sheet was somewhat deteriorated with time by heating and humidification, although there was no problem at all in actual use.

In all of the pressure-sensitive adhesive layers of Examples 1 to 3, the haze was low and the transparency was high.

[Industrial Applicability]

The present invention can be used in the field of materials using pressure-sensitive adhesives such as pressure-sensitive adhesive sheets, and can also be used for fixing carbon dioxide.

[Reference Signs List]

1: Pressure-sensitive adhesive sheet, 11: Substrate sheet, 11a: Surface of substrate sheet, 12: Pressure-sensitive adhesive layer, 12a: Surface of pressure-sensitive adhesive layer, 13: Release film

## Claims

1. A pressure-sensitive adhesive comprising an aliphatic polycarbonate as an adhesive component,
wherein the aliphatic polycarbonate neither comprises a carboxylic acid ester bond, nor a urethane bond in the main chain thereof, and
the aliphatic polycarbonate comprises a structural unit (i) having an alkoxy group, and a structural unit (ii) having either one or both of a hydroxy group and a carboxy group, and the glass transition point of the aliphatic polycarbonate is 0°C or less, wherein the glass transition point is determined by the method described in the description.

2. The pressure-sensitive adhesive according to Claim 1, wherein the aliphatic polycarbonate has a weight average molecular weight of 100,000 or more, wherein the weight average molecular weight is determined by the method described in the description.

3. The pressure-sensitive adhesive according to Claim 1 or Claim 2, wherein the aliphatic polycarbonate comprises a structural unit represented by the following general formula (1)-1

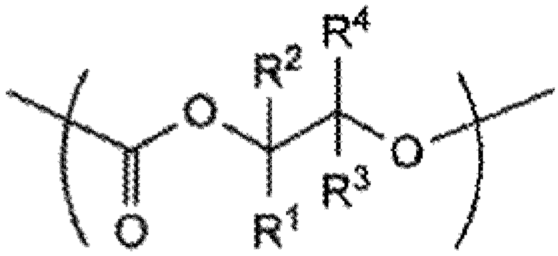

(1) -1

wherein $R^1$, $R^2$, $R^3$ and $R^4$ each independently represent a hydrogen atom or an alkyl group, an alkoxy group, an alkenyl group, an alkylcarbonyloxyalkyl group, an alkenylcarbonyloxyalkyl group or an aryl group, which groups may have a substituent, and when any two or more of $R^1$, $R^2$, $R^3$ and $R^4$ are alkyl groups which may have a substituent, said two or more alkyl groups may be bonded to each other to form a ring.

4. The pressure-sensitive adhesive according to any one of Claims 1 to 3, wherein the aliphatic polycarbonate comprises either one or both of an alkyl group and an alkoxy group having 1 to 16 carbon atoms as a side chain.

5. The pressure-sensitive adhesive according to any one of Claims 1 to 4, wherein the aliphatic polycarbonate is obtained by using carbon dioxide as a raw material.

6. A pressure-sensitive adhesive sheet comprising a pressure-sensitive adhesive layer including the pressure-sensitive adhesive according to any one of Claims 1 to 5.

**Patentansprüche**

1. Druck-sensitives Klebemittel umfassend ein aliphatisches Polycarbonat als eine Klebemittelkomponente, wobei das aliphatische Polycarbonat weder eine Carbonsäure-Ester-Bindung, noch eine Urethan-Bindung in der Hauptkette davon umfasst, und
das aliphatische Polycarbonat eine Struktureinheit (i) mit einer Alkoxygruppe, und eine Struktureinheit (ii) mit entweder einer oder beiden von einer Hydroxygruppe und einer Carboxygruppe umfasst, und der Glasübergangspunkt des aliphatischen Polycarbonats 0°C oder weniger ist, wobei der Glasübergangspunkt durch das Verfahren, beschrieben in der Beschreibung, bestimmt ist.

2. Druck-sensitives Klebemittel nach Anspruch 1, wobei das aliphatische Polycarbonat ein gewichtsdurchschnittliches Molekulargewicht von 100.000 oder mehr hat, wobei das gewichtsdurchschnittliche Molekulargewicht durch das Verfahren, beschrieben in der Beschreibung, bestimmt ist.

3. Druck-sensitives Klebemittel nach Anspruch 1 oder Anspruch 2, wobei das aliphatische Polycarbonat eine Struktureinheit, dargestellt durch die folgende allgemeine Formel (1)-1, umfasst,

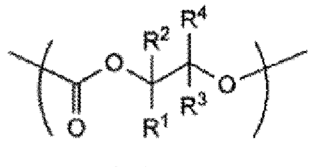

(1) -1

wobei $R^1$, $R^2$, $R^3$ und $R^4$ jeweils unabhängig ein Wasserstoffatom oder eine Alkylgruppe, eine Alkoxygruppe, eine Alkenylgruppe, eine Alkylcarbonyloxyalkylgruppe, eine Alkenylcarbonyloxyalkylgruppe oder eine Arylgruppe darstellen, wobei die Gruppen einen Substituenten haben können, und wenn irgendwelche zwei oder mehreren von $R^1$, $R^2$, $R^3$ und $R^4$ Alkylgruppen, die einen Substituenten haben können, sind, die zwei oder mehreren Alkylgruppen aneinander gebunden sein können, um einen Ring zu bilden.

4. Druck-sensitives Klebemittel nach irgendeinem der Ansprüche 1 bis 3, wobei das aliphatische Polycarbonat entweder eine oder beide von einer Alkylgruppe und einer Alkoxygruppe mit 1 bis 16 Kohlenstoffatomen als eine Seitenkette umfasst.

5. Druck-sensitives Klebemittel nach irgendeinem der Ansprüche 1 bis 4, wobei das aliphatische Polycarbonat durch Verwenden von Kohlenstoffdioxid als ein Rohmaterial erhalten wird.

6. Druck-sensitive Klebefolie umfassend eine Druck-sensitive Klebeschicht einschließend das Druck-sensitive Klebemittel nach irgendeinem der Ansprüche 1 bis 5.

**Revendications**

1. Adhésif sensible à la pression comprenant un polycarbonate aliphatique comme un constituant adhésif, dans lequel le polycarbonate aliphatique ne comprend ni liaison ester d'acide carboxylique, ni liaison uréthane dans la chaîne principale de celui-ci, et le polycarbonate aliphatique comprend une unité structurelle (i) présentant un groupe alcoxy, et une unité structurelle (ii) présentant soit l'un soit les deux d'un groupe hydroxy et d'un groupe carboxy, et le point de transition vitreuse du polycarbonate aliphatique est de 0°C ou inférieur, dans lequel le point de transition vitreuse est déterminé par le procédé décrit dans la description.

2. Adhésif sensible à la pression selon la revendication 1, dans lequel le polycarbonate aliphatique présente une masse moléculaire moyenne en masse de 100 000 ou supérieure, dans lequel la masse moléculaire moyenne en masse est déterminée par le procédé décrit dans la description.

3. Adhésif sensible à la pression selon la revendication 1 ou la revendication 2, dans lequel le polycarbonate aliphatique comprend une unité structurelle représentée par la formule (1)-1 générale suivante

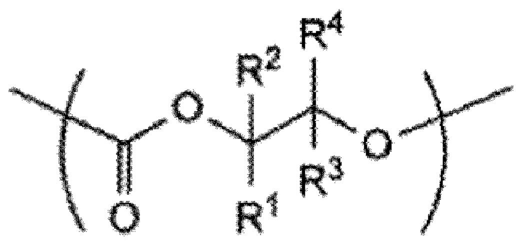

(1)-1

dans laquelle $R^1$, $R^2$, $R^3$ et $R^4$ représentent chacun indépendamment un atome d'hydrogène ou un groupe alkyle, un groupe alcoxy, un groupe alcényle, un groupe alkylcarbonyloxyalkyle, un groupe alcénylcarbonyloxyalkyle ou un groupe aryle, lesquels groupes peuvent présenter un substituant, et lorsque deux quelconques ou plus de $R^1$, $R^2$, $R^3$ et $R^4$ sont des groupes alkyle qui peuvent présenter un substituant, lesdits deux groupes alkyle ou plus peuvent être liés l'un à l'autre pour former un noyau.

4. Adhésif sensible à la pression selon l'une quelconque des revendications 1 à 3, dans lequel le polycarbonate aliphatique comprend soit l'un soit les deux d'un groupe alkyle et d'un groupe alcoxy ayant de 1 à 16 atomes de carbone comme une chaîne latérale.

5. Adhésif sensible à la pression selon l'une quelconque des revendications 1 à 4, dans lequel le polycarbonate aliphatique est obtenu en utilisant du dioxyde de carbone comme une matière première.

6. Feuille adhésive sensible à la pression comprenant une couche adhésive sensible à la pression incluant l'adhésif sensible à la pression selon l'une quelconque des revendications 1 à 5.

FIG. 1

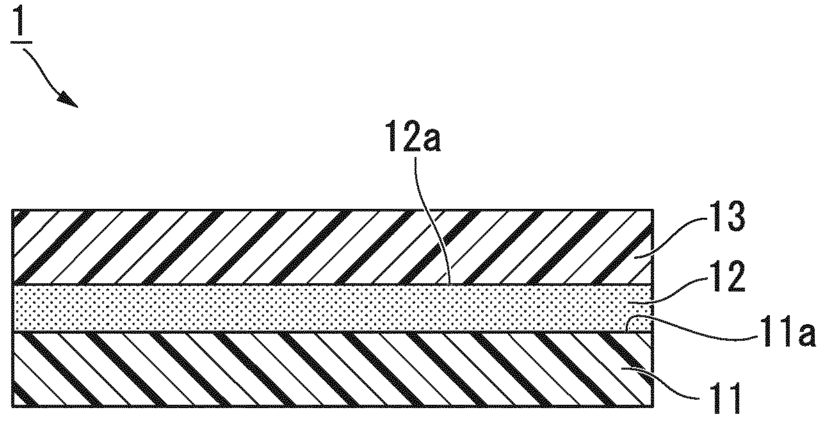


FIG. 2

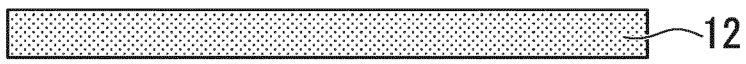


FIG. 3

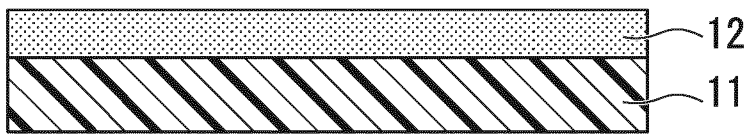

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015126765 A
- JP HEI9235537 B
- JP HEI6334282 B
- JP HEI524934 B
- JP 2014001263 A
- JP 2014019748 A
- US 20040219193 A1
- EP 1219695 A2
- US 20100323201 A1
- WO 2011142259 A